# FASCICULE DE BREVET EUROPEEN

(11) **EP 2 978 629 B1**
(45) Date de publication et mention de la délivrance du brevet: **03.05.2017**
(21) Numéro de dépôt: 14713520.6
(22) Date de dépôt: 03.03.2014
(51) Int. Cl.: B60N 2/225, B60N 2/20

(54) **ENSEMBLE D'ARTICULATION DEBRAYABLE POUR SIEGE DE VEHICULE AUTOMOBILE**
ENTKUPPELBARE GELENKANORDNUNG FÜR EINEN KRAFTFAHRZEUGSITZ
DISENGAGEABLE ARTICULATION ASSEMBLY FOR MOTOR VEHICLE SEAT

(30) Priorité: 26.03.2013 FR 1352745
(43) Date de publication de la demande: 03.02.2016
(73) Titulaire: Peugeot Citroën Automobiles SA, 78140 Vélizy Villacoublay (FR)
(72) Inventeur: FU, Chuanlang, F-75019 Paris (FR); HAYAT, David, F-78770 Auteuil (FR); DUTOT, Christophe, F-94400 Vitry sur Seine (FR); PINTO TEIXEIRA, Frederic, F-91160 Ballainvilliers (FR)
(86) Numéro de dépôt international: PCT/FR2014/050464
(87) Numéro de publication internationale: WO 2014/154966

(56) Documents cités:
- DE-A1-102006 003 243
- DE-A1-102010 038 797
- FR-A1- 2 743 032

## Description

### Domaine de l'invention

La présente invention concerne d'une manière générale les ensembles d'articulation permettant de régler l'inclinaison entre le dossier et l'assise d'un siège de véhicule automobile, et vise en particulier ceux de type « continu » autorisant un réglage fin de cette inclinaison.

### Arrière-plan de l'invention

Un tel ensemble d'articulation « continu » qui est décrit par exemple dans la demande française FR 2 743 032, comporte classiquement :
- un premier flasque lié en rotation avec une denture extérieure présentant un premier axe ;
- un deuxième flasque lié en rotation avec une denture intérieure présentant un deuxième axe parallèle et distant dudit premier axe, lesdits premier et deuxième flasques étant prévus pour être fixés respectivement à l'assise et au dossier du siège ;
- un mécanisme à excentrique reliant lesdites dentures intérieure et extérieure, et
- un organe de commande pour faire tourner le mécanisme à excentrique et entrainer la rotation de la denture extérieure dans la denture intérieure de sorte à faire varier la position angulaire relative entre ladite assise et ledit dossier.

Ce type d'articulation qui autorise un réglage fin de l'angle d'inclinaison entre l'assise et le dossier du siège, présente toutefois l'inconvénient d'empêcher l'utilisateur de faire passer rapidement le dossier de sa position relevée vers une position rabattue permettant l'accès aux places arrière du véhicule.

On connaît également des ensembles d'articulation de type « discontinu » permettant de réaliser un tel basculement rapide du dossier.

Cependant, ces ensembles de type « discontinus » n'autorisent qu'un réglage angulaire grossier de l'orientation du dossier par rapport à l'assise, ce qui ne permet pas à l'utilisateur d'obtenir le même degré de confort que celui obtenu avec les ensembles de type « continu ».

### Objet et résumé de l'invention

La présente invention vise donc à proposer un ensemble d'articulation qui permette d'assurer un réglage fin de l'angle d'inclinaison entre l'assise et le dossier du siège, tout en permettant également de faire passer rapidement ce dossier entre sa position relevée et une position abaissée permettant l'accès aux places arrière du véhicule.

Elle propose à cet effet, un ensemble d'articulation débrayable pour siège de véhicule automobile comportant :
- un premier flasque lié en rotation avec une denture extérieure présentant un premier axe ;
- un deuxième flasque, lesdits premier et deuxième flasques étant prévus pour être fixés respectivement à l'assise et au dossier du siège ou vice versa ;
- un mécanisme à excentrique reliant ladite denture extérieure à une denture intérieure présentant un deuxième axe parallèle et légèrement distant dudit premier axe, et comportant un nombre de dents supérieur d'au moins une dent à celui de ladite denture extérieure,
- un organe de commande pour faire tourner ledit mécanisme à excentrique et entrainer la rotation de ladite denture extérieure dans ladite denture intérieure ;
ledit ensemble d'articulation étant caractérisé en ce qu'il comporte en outre des moyens de débrayage aptes à faire passer ledit ensemble d'articulation d'une configuration verrouillée dans laquelle ladite denture intérieure est liée en rotation avec ledit deuxième flasque à une configuration déverrouillée dans laquelle ladite denture intérieure et ledit deuxième flasque sont désolidarisés en rotation l'un par rapport à l'autre.

Grâce à la présence des moyens de débrayage permettant d'établir ou de supprimer la liaison en rotation entre la denture intérieure et le deuxième flasque, l'ensemble d'articulation selon l'invention peut passer très facilement d'une configuration de type « continu » dans laquelle l'utilisateur peut effectuer un réglage fin de l'angle d'inclinaison entre l'assise et le dossier du siège, à une configuration de type « discontinue » dans laquelle les deux flasques peuvent tourner librement l'un autour de l'autre de sorte que l'utilisateur peut faire passer rapidement le dossier de sa position relevée vers une position rabattue permettant l'accès aux places arrière du véhicule.

Selon des caractéristiques préférées de l'agrafe, prises seules ou en combinaison :
- lesdits moyens de débrayage comportent un organe de débrayage comprenant des mâchoires aptes à coulisser le long d'empreintes radiales correspondantes prévues sur ledit deuxième flasque pour venir mordre une coupelle logeant ladite denture intérieure, de sorte que cette denture intérieure soit liée en rotation avec ledit deuxième flasque et que ledit ensemble d'articulation occupe alors ladite configuration verrouillée ;
- ledit organe de débrayage comporte une plaque annulaire comprenant en périphérie des ouvertures oblongues formant chemin de came et situées en regard d'une dite empreinte radiale correspondante dudit deuxième flasque, et en ce que lesdites mâchoires comportent chacune un pion saillant dont l'extrémité libre est introduite dans un dit chemin de came correspondant ; les dites ouvertures oblongues étant conformées de sorte que la mise en rotation dudit organe de débrayage entraine le coulissement desdites mâchoires le long desdites empreintes radiales ;
- lesdites mâchoires présentent à leurs extrémités intérieures des dents aptes à coopérer avec une bande crantée disposée à la périphérie extérieure de ladite coupelle ;
- ledit organe de débrayage comporte trois dites mâchoires disposées à 120° les unes des autres ;
- ledit ensemble d'articulation comporte des moyens de rappel élastiques sollicitant en permanence ledit organe de débrayage de sorte que les dites mâchoires mordent ladite coupelle et que ledit ensemble d'articulation occupe ladite configuration verrouillée ;
- les dits moyens de rappels élastiques comportent des ressorts spiraux fixés par leurs extrémités centrales sur ledit deuxième flasque et dont les extrémités périphériques radiales sont respectivement accolées à des pattes correspondantes faisant saillie axialement depuis la périphérie dudit organe de débrayage et en direction dudit deuxième flasque ;
- ledit ensemble d'articulation comporte trois dits ressorts spiraux fixés sur ledit deuxième flasque à 120° les uns des autres et coopérant avec trois dites pattes disposées également à 120° les unes des autres ;
- ledit ensemble d'articulation comporte un deuxième organe de commande monté sur ledit organe de débrayage et traversant une fente en arc de cercle située sur ledit deuxième flasque, ledit deuxième organe de commande permettant à un utilisateur de mettre en rotation ledit organe de débrayage à l'encontre des dits moyens de rappel élastiques de sorte que les dites mâchoires soient écartées de ladite coupelle et que ledit ensemble d'articulation occupe ladite configuration déverrouillée ; et/ou
- ledit ensemble d'articulation comporte un pignon comprenant ladite denture extérieure, la face interne dudit premier flasque comportant un relief annulaire cranté emboîté dans une empreinte correspondante que présente ledit pignon.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue éclatée en perspective de trois quart avant des éléments constitutifs de ensemble d'articulation selon l'invention ;
- la figure 2 représente une vue éclatée en perspective de trois quart arrière des éléments constitutifs de l'ensemble d'articulation ;
- la figure 3 représente une vue de côté de l'ensemble d'articulation de la figure 1 ;
- la figure 4 représente une vue de face de l'ensemble d'articulation de la figure 1 dans sa configuration verrouillée, le premier flasque ayant été retiré pour une meilleure compréhension de l'invention ;
- la figure 5 est une vue partielle agrandie et en coupe d'une zone de verrouillage de l'ensemble d'articulation de la figure 4 selon le plan repéré par V-V ;
- la figure 6 est une vue semblable à la figure 4 mais dans laquelle l'ensemble d'articulation selon l'invention occupe sa configuration déverrouillée ; et
- la figure 7 est une vue partielle agrandie et en coupe d'une zone de verrouillage de l'ensemble d'articulation de la figure 6 selon le plan repéré par VII-VII.

### Description détaillée d'un mode de réalisation

L'ensemble d'articulation 1 représenté sur les figures est intégré dans un siège de véhicule automobile (non illustré) et permet de régler l'inclinaison relative entre le dossier et l'assise de ce siège.

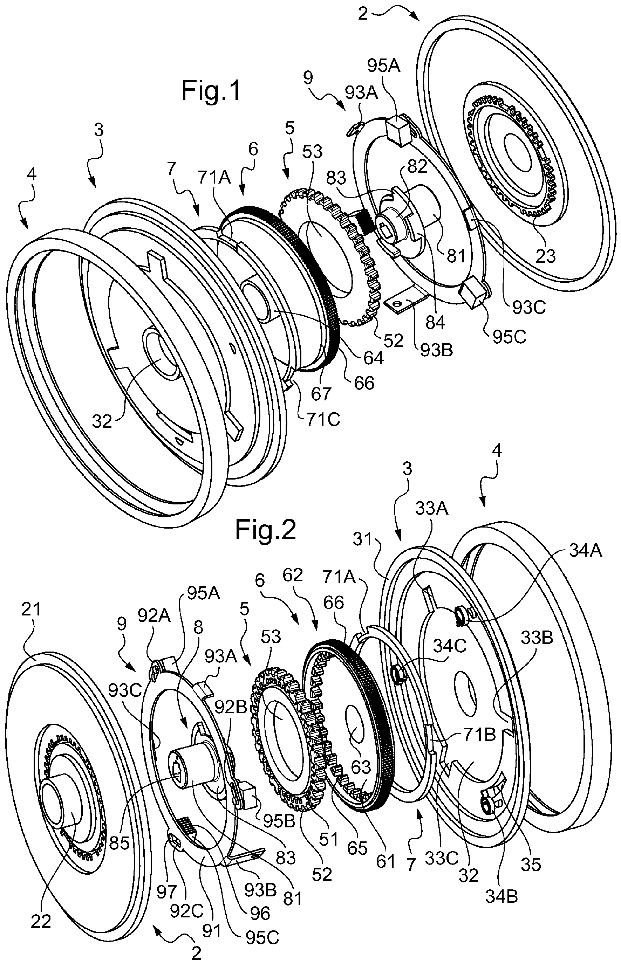

Comme illustré sur la figure 1, l'ensemble d'articulation 1 comporte un premier flasque 2 et un deuxième flasque 3 fixés respectivement au dossier et à l'assise du siège ou vice versa, de préférence par soudage.

Les rebords périphériques 21, 31 des deux flasques 2 et 3 sont maintenus accolés l'un à l'autre par l'intermédiaire d'une bague annulaire de maintien 4.

Chaque flasque 2, 3 présente une ouverture centrale qui se prolonge axialement vers l'extérieur par un manchon respectif 22, 32 faisant saillie axialement.

Le flasque 3 présente en face interne une empreinte principale circulaire 32 prolongée radialement par trois empreintes rectangulaires 33 de dimensions beaucoup plus réduites et qui sont espacées régulièrement les unes des autres d'un angle de 120°.

Trois ressorts spiraux 34A, 34B, 34C sont fixés par leurs extrémités centrales respectives du côté interne de ce flasque 3. Ces trois ressorts 34A, 34B, 34C sont également espacés régulièrement les uns des autres d'un angle de 120°, chacun d'entre eux étant positionné à la périphérie de l'empreinte circulaire 32 entre deux empreintes rectangulaires 33A, 33B, 33C. D'autre part, les extrémités périphériques des ressorts 34A, 34B, 34C sont pliées de manière à ce qu'elles s'étendent radialement vers l'intérieur du flasque 3.

Le flasque 3 présente également une fente 35 en arc de cercle disposée à proximité de l'un des ressorts 34A, 34B, 34C de sorte que son extrémité périphérique radiale soit située à l'aplomb de cette fente 35.

Les deux flasques délimitent un espace à l'intérieur duquel sont positionnés un pignon 5, une coupelle 6, un anneau de roulement 7, un mécanisme à excentrique (non représenté par soucis de simplification des figures), un organe de commande excentrique 8 et un organe de débrayage 9.

Le pignon 5 est positionné contre la face interne du flasque 2 avec lequel il est lié mécaniquement par emboitement. Plus précisément, la face interne du flasque 2 comporte un relief annulaire cranté 23 qui est emboîté dans une empreinte correspondante 51 que présente le pignon 5. Le pignon 5 comporte en outre une denture extérieure 52 et une ouverture centrale 53 qui sont centrées sur l'axe du flasque 2.

La coupelle 6 comporte une paroi radiale 61 portant à sa périphérie externe une couronne annulaire 62 centrée sur l'axe du flasque 3.

La paroi radiale 61 présente une ouverture circulaire centrale 63 se prolongeant axialement en direction du flasque 3 par un manchon 64 qui est reçu à l'intérieur du manchon 32 du flasque 3.

La couronne annulaire 62 présente une denture intérieure 65 comportant un nombre de dents supérieur d'au moins une dent à celui de la denture extérieure 52 du pignon 5. Cette denture intérieure 65 qui est engrainée avec la denture extérieure 52, présente un axe parallèle et légèrement distant de celui de cette denture extérieure 52.

La couronne 62 présente également sur sa périphérie extérieure une bande crantée 66. Cette bande crantée 66 est plus étroite que cette couronne 62, de sorte qu'elle n'en occupe qu'une partie (environ les 2/3) de sa largeur, l'autre partie formant un décrochement annulaire 67 de plus petit diamètre rejoignant la paroi radiale 61.

L'anneau de roulement 7 est emmanché serré sur le décrochement annulaire 67 de la couronne 62, de sorte que cet anneau 7 demeure en permanence solidaire de cette couronne 62. Il présente trois encoches radiales périphériques 71A, 71B, 71C en arc de cercle qui sont régulièrement espacées les unes des autres d'un angle de 120°.

L'anneau de roulement 7 est reçu à l'intérieur de l'empreinte circulaire 32 du flasque 3. Il est ainsi guidé en libre rotation autour du rebord de cette empreinte 32. Afin de limiter les frottements avec le flasque 3, l'anneau 7 est recouvert en périphérie externe d'un revêtement « anti-friction », tel que du polytétrafluoroéthylène.

Un mécanisme à excentrique connu en soi et non représenté sur les figures par soucis de simplification, est disposé à l'intérieur de l'ouverture 53 pratiquée dans le pignon 5.

L'organe de commande excentrique 8 de ce mécanisme est réalisé d'une seule pièce et comprend deux moyeux cylindriques 81, 82 s'étendant de part et d'autre d'un disque 83 présentant des doigts d'entrainement 84 faisant axialement saillie en direction du flasque 3.

Les moyeux cylindriques 81, 82 sont centrés respectivement sur l'axe du premier flasque 2 et sur celui du deuxième flasque 3.

D'autre part, le premier moyeu cylindrique 81 est reçu à l'intérieur de l'ouverture 22 du premier flasque 2 tandis que le deuxième moyeu cylindrique 82 est reçu à l'intérieur du manchon 64 de la coupelle 6 lui-même reçu à l'intérieur du manchon 32 du flasque 3.

Le premier moyeu 82 présente également un évidement central 85 prévu pour la réception d'une tige d'entrainement reliée à une molette.

L'actionnement en rotation de cette molette entraine la transmission d'un couple à l'organe de commande excentrique 8 qui va faire tourner le mécanisme à excentrique et provoquer un mouvement excentré de la coupelle 6 par rapport au pignon 5, la denture intérieure 65 de cette coupelle 6 tournant autour de la denture extérieure 52 de ce pignon 5.

L'organe de débrayage 9 comporte une plaque annulaire 91 comprenant trois ailettes 92A, 92B, 92C faisant saillie radialement vers l'extérieur et disposées à 120° les unes des autres. Chaque ailette 92A, 92B, 92C présente une ouverture oblongue formant chemin de came et située en regard d'une empreinte rectangulaire correspondante 33A, 33B, 33C du flasque 3, ces ouvertures oblongues orientées quasitangentiellement à la plaque annulaire 91 s'étendant également légèrement de manière radiale en direction opposé de l'axe de cette plaque annulaire 91.

La plaque annulaire 91 comprend également trois pattes 93A, 93B, 93C faisant saillie axialement depuis sa périphérie et en direction du flasque 3. Ces trois pattes 93A, 93B, 93C sont également espacées régulièrement les unes des autres d'un angle de 120°, chacune d'entre elles étant disposée entre deux ailettes 92A, 92B, 92C.

Chacune de ces pattes 93A, 93B, 93C présente un rebord latéral qui est accolé à l'extrémité périphérique radiale d'un ressort spiral 34A, 34B, 34C correspondant.

La patte 93B de plus grande longueur que les deux autres traverse la fente 35 du flasque 3. Cette patte 93B forme ainsi une patte de commande qui peut être actionnée depuis l'extérieur de l'ensemble d'articulation 1 pour faire pivoter la plaque annulaire 91 à l'encontre des forces de rappel élastiques des ressorts 34A, 34B, 34C.

L'organe de débrayage 9 comporte également trois mâchoires parallélépipédiques 95A, 95B, 95C dont les extrémités intérieures présentent des dents 96 aptes à coopérer avec la bande crantée périphérique 66 de la couronne annulaire 62.

Les mâchoires 95A, 95B, 95C s'étendent axialement entre la plaque annulaire 31 et le flasque 3.

Chaque mâchoire 95A, 95B, 95C est reçue partiellement à l'intérieur d'une empreinte rectangulaire 33A, 33B, 33C correspondante du flasque 3, de sorte qu'elle puisse coulisser radialement le long de cette empreinte.

D'autre part, chaque mâchoire 95A, 95B, 95C comprend un pion saillant 97 dont l'extrémité est introduite dans le chemin de came d'une ailette 92A, 92B, 92C correspondante.

On va maintenant décrire rapidement le fonctionnement de l'ensemble d'articulation selon l'invention.

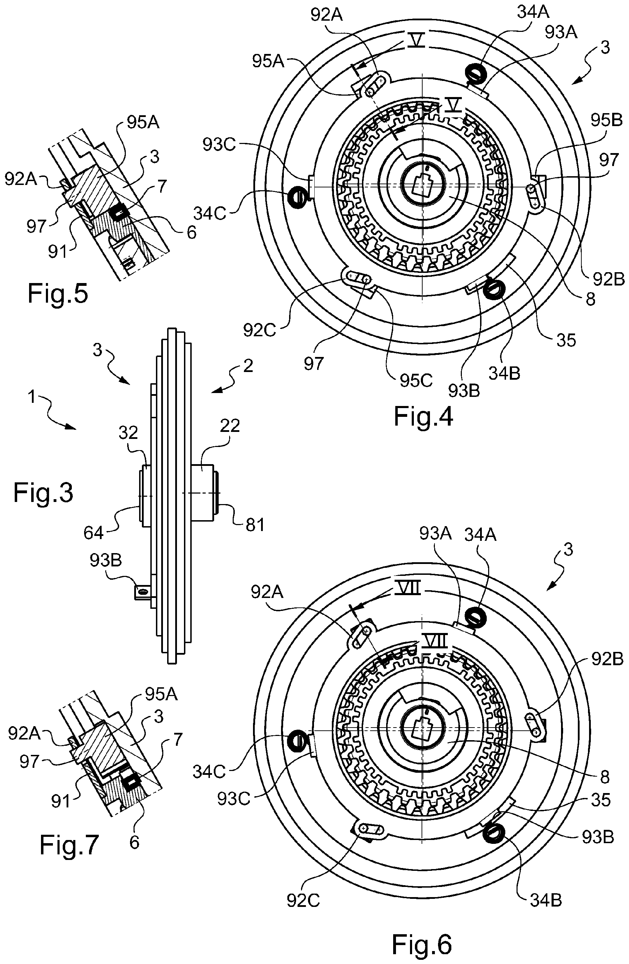

Lorsqu'aucun effort n'est appliqué sur la patte de commande 93B, les extrémités périphériques radiales des ressorts spiraux 34A, 34B, 34C exercent une force de rappel élastique à l'encontre des pattes 93A, 93B, 93C de l'organe de débrayage 9, de sorte que les dents des mâchoires 95A, 95B, 95C mordent sur la bande crantée périphérique 66 de la coupelle 6 qui est alors liée mécaniquement au flasque 3 (figures 4 et 5).

On remarquera que cette position de verrouillage peut être atteinte grâce aux trois encoches radiales périphériques 71A, 71B, 71C de l'anneau 7 dont le positionnement angulaire correspond à celui des empreintes 33A, 33B, 33C du flasque 3, ce qui permet d'éviter que les dentures 96 des mâchoires 95A, 95B, 95C ne butent sur la périphérie externe de cet anneau 7 avant d'atteindre la bande crantée périphérique 66 de la coupelle 6.

Ainsi, l'ensemble d'articulation 1 est maintenue en configuration verrouillée dans laquelle la denture intérieure 65 de la coupelle 6 est liée en rotation avec le flasque 3, de sorte que lorsqu'un couple de rotation est transmis à l'organe de commande excentrique 8, les deux flasques 2 et 3 pivotent l'un par rapport à l'autre de manière continue, ce qui permet de régler précisément l'inclinaison du dossier par rapport à l'assise du siège.

Lorsque l'utilisateur appuie sur l'un des rebords latéraux de la patte de commande 93B de sorte à exercer un effort tangentiel s'opposant aux forces de rappel élastiques des ressorts 34A, 34B, 34C, cela entraine la rotation de la plaque annulaire 91 par rapport au flasque 3.

Les mâchoires 95A, 95B, 95C étant empêchées d'accompagner ce mouvement de rotation à cause des empreintes rectangulaires 33A, 33B, 33C dans lesquelles elles sont partiellement reçues, cela va donc contraindre les pions 97 des mâchoires 95A, 95B, 95C à se déplacer le long des ouvertures oblongues formant chemins de came des ailettes 92A, 92B, 92C. La conformation de ces chemins de came entraine ainsi le coulissement radial de ces mâchoires 95A, 95B, 95C le long des empreintes 33A, 33B, 33C et vers la périphérie de l'ensemble d'articulation 1, comme représenté sur les figures 6 et 7.

Les dents des mâchoires 95A, 95B, 95C étant désormais à l'écart de la bande crantée périphérique 66 de la coupelle 6, l'ensemble d'articulation 1 se trouve en configuration déverrouillée dans laquelle le flasque 3 est désolidarisé en rotation par rapport à la coupelle 6 logeant la denture intérieure 65. Ainsi, les deux flasques 2 et 3 peuvent pivoter librement l'un par rapport à l'autre, ce qui permet notamment de faire passer très rapidement le dossier d'une position relevée à une position abaissée ou intermédiaire permettant l'accès aux places arrière du véhicule ou la mise en tablette de ce dossier.

Dès que l'utilisateur commence à faire pivoter le dossier, l'anneau de roulement 7 se déplace en rotation vis-à-vis du flasque 3 de sorte que le positionnement angulaire de ses trois encoches radiales périphériques 71A, 71B, 71C ne correspond plus avec celui des empreintes 33A, 33B, 33C de ce flasque 3. L'utilisateur peut donc relâcher la patte de commande 93B sans pour autant provoquer le retour immédiat de l'ensemble d'articulation 1 en configuration verrouillée, les dentures 96 des mâchoires 95A, 95B, 95C butant sur la périphérie de cet anneau 7 avant de pouvoir atteindre la bande crantée périphérique 66 de la coupelle 6.

Le pivotement du dossier peut être poursuivi librement par l'utilisateur, les dentures 96 des mâchoires 95A, 95B, 95C glissant alors le long de la périphérie externe de l'anneau 7.

Lorsque l'anneau 7 a tourné de 120° par rapport au flasque 3, le positionnement angulaire de ses trois encoches radiales périphériques 71A, 71B, 71C correspond à nouveau avec celui des empreintes 33A, 33B, 33C de ce flasque 3, de sorte que les forces de rappel élastiques des ressorts 34A, 34B, 34C ramènent automatiquement l'ensemble d'articulation 1 dans sa configuration verrouillée dans laquelle les dents des mâchoires 95A, 95B, 95C mordent sur la bande crantée périphérique 66 de la coupelle 6.

Selon des variantes de réalisation non représentées, certains éléments de l'ensemble d'articulation selon l'invention peuvent être conformés différemment. Tel est notamment le cas de l'organe de débrayage dont la forme, le nombre et la disposition des mâchoires, des pattes peuvent être modifiés.

## Revendications

1. Ensemble d'articulation débrayable pour siège de véhicule automobile comportant :
- un premier flasque (2) lié en rotation avec une denture extérieure (52) présentant un premier axe ;
- un deuxième flasque (3), lesdits premier et deuxième flasques (2, 3) étant prévus pour être fixés respectivement à l'assise et au dossier du siège ou vice versa ;
- un mécanisme à excentrique reliant ladite denture extérieure (52) à une denture intérieure (65) présentant un deuxième axe parallèle et légèrement distant dudit premier axe, et comportant un nombre de dents supérieur d'au moins une dent à celui de ladite denture extérieure (52),
- un organe de commande (8) pour faire tourner ledit mécanisme à excentrique et entrainer la rotation de ladite denture extérieure (52) dans ladite denture intérieure (65) ;
ledit ensemble d'articulation étant **caractérisé en ce qu'**il comporte en outre des moyens de débrayage (9) aptes à faire passer ledit ensemble d'articulation d'une configuration verrouillée dans laquelle ladite denture intérieure (65) est liée en rotation avec ledit deuxième flasque (3) à une configuration déverrouillée dans laquelle ladite denture intérieure (65) et ledit deuxième flasque (3) sont désolidarisés en rotation l'un par rapport à l'autre.

2. Ensemble d'articulation selon la revendication 1, **caractérisé en ce que** lesdits moyens de débrayage comportent un organe de débrayage (9) comprenant des mâchoires (95A, 95B, 95C) aptes à coulisser le long d'empreintes radiales correspondantes (33A, 33B, 33C) prévues sur ledit deuxième flasque (3) pour venir mordre une coupelle (6) logeant ladite denture intérieure (65), de sorte que cette denture intérieure (65) soit liée en rotation avec ledit deuxième flasque (3) et que ledit ensemble d'articulation occupe alors ladite configuration verrouillée.

3. Ensemble d'articulation selon la revendication 2, **caractérisé en ce que** ledit organe de débrayage (9) comporte une plaque annulaire (91) comprenant en périphérie des ouvertures oblongues formant chemin de came et situées en regard d'une dite empreinte radiale correspondante (33A, 33B, 33C) dudit deuxième flasque (3), et **en ce que** lesdites mâchoires (95A, 95B, 95C) comportent chacune un pion saillant (97) dont l'extrémité libre est introduite dans un dit chemin de came correspondant ; les dites ouvertures oblongues étant conformées de sorte que la mise en rotation dudit organe de débrayage (9) entraine le coulissement desdites mâchoires (95A, 95B, 95C) le long desdites empreintes radiales (33A, 33B, 33C).

4. Ensemble d'articulation selon l'une des revendications 2 ou 3, **caractérisé en ce que** lesdites mâchoires (95A, 95B, 95C) présentent à leurs extrémités intérieures des dents (96) aptes à coopérer avec une bande crantée (66) disposée à la périphérie extérieure de ladite coupelle (6).

5. Ensemble d'articulation selon l'une des revendications 2 à 4, **caractérisé en ce que** ledit organe de débrayage (9) comporte trois dites mâchoires (95A, 95B, 95C) disposées à 120° les unes des autres.

6. Ensemble d'articulation selon l'une des revendications 2 à 5, **caractérisé en ce qu'**il comporte des moyens de rappel élastiques (34A, 34B, 34C) sollicitant en permanence ledit organe de débrayage (9) de sorte que les dites mâchoires (95A, 95B, 95C) mordent ladite coupelle (6) et que ledit ensemble d'articulation occupe ladite configuration verrouillée.

7. Ensemble d'articulation selon la revendication 6, **caractérisé en ce que** les dits moyens de rappels élastiques comportent des ressorts spiraux (34A, 34B, 34C) fixés par leurs extrémités centrales sur ledit deuxième flasque (3) et dont les extrémités périphériques radiales sont respectivement accolées à des pattes correspondantes (93A, 93B, 93C) faisant saillie axialement depuis la périphérie dudit organe de débrayage (9) et en direction dudit deuxième flasque (3).

8. Ensemble d'articulation selon la revendication 7, **caractérisé en ce qu'**il comporte trois dits ressorts spiraux (34A, 34B, 34C) fixés sur ledit deuxième flasque (3) à 120° les uns des autres et coopérant avec trois dites pattes (93A, 93B, 93C) disposées également à 120° les unes des autres.

9. Ensemble d'articulation selon l'une des revendications 6 à 8, **caractérisé en ce qu'**il comporte un deuxième organe de commande (93B) monté sur ledit organe de débrayage (9) et traversant une fente (35) en arc de cercle située sur ledit deuxième flasque (3), ledit deuxième organe de commande (93B) permettant à un utilisateur de mettre en rotation ledit organe de débrayage (9) à l'encontre des dits moyens de rappel élastiques (34A, 34B, 34C) de sorte que les dites mâchoires (95A, 95B, 95C) soient écartées de ladite coupelle (6) et que ledit ensemble d'articulation occupe ladite configuration déverrouillée.

10. Ensemble d'articulation selon l'une des revendications 1 à 9, **caractérisé en ce qu'**il comporte un pignon (5) comprenant ladite denture extérieure (52), la face interne dudit premier flasque (2) comportant un relief annulaire cranté (23) emboîté dans une empreinte correspondante (51) que présente ledit pignon (5).

## Patentansprüche

1. Entkuppeltbare Gelenkanordnung für Kraftfahrzeugsitz, die Folgendes umfasst:
- einen ersten Flansch (2), der in Drehung mit einer Außenverzahnung (52), die eine erste Achse aufweist, verbunden ist,
- einen zweiten Flansch (3), wobei der erste und der zweite Flansch (2, 3) vorgesehen sind, um jeweils an der Sitzfläche und an der Rückenlehne des Sitzes oder umgekehrt befestigt zu sein,
- einen Mechanismus mit Exzenter, der die Außenverzahnung (52) mit einer Innenverzahnung (65) verbindet, die eine parallele und leicht von der ersten Achse beabstandete zweite Achse aufweist und eine Zahnanzahl umfasst, die um mindestens einen Zahn größer ist als die der Außenverzahnung (52),
- ein Steuerelement (8), um den Mechanismus mit Exzenter drehen zu lassen und die Drehung der Außenverzahnung (52) in der Innenverzahnung (65) anzutreiben,
Gelenkanordnung **dadurch gekennzeichnet, dass** sie außerdem Mittel zum Entkuppeln (9) umfasst, die geeignet sind, um die Gelenkanordnung von einer verriegelten Konfiguration, in der die Innenverzahnung (65) in Drehung mit dem zweiten Flansch (3) verbunden ist, auf eine entriegelte Konfiguration, in der die Innenverzahnung (65) und der zweite Flansch (3) in Drehung voneinander getrennt sind, übergehen zu lassen.

2. Gelenkanordnung nach Anspruch 1, **dadurch gekennzeichnet, dass** die Mittel zum Entkuppeln ein Entkuppelelement (9) umfassen, das Backen (95A, 95B, 95C) umfasst, die geeignet sind, um entlang entsprechender radialer Abdrücke (33A, 33B, 33C), die auf dem zweiten Flansch (3) vorgesehen sind, zu gleiten, um in eine Schale (6), in der die Innenverzahnung (65) untergebracht ist, derart zum Eingriff zu kommen, dass diese Innenverzahnung (65) in Drehung mit dem zweiten Flansch (3) verbunden ist, und dass die Gelenkanordnung daher die verriegelte Konfiguration belegt.

3. Gelenkanordnung nach Anspruch 2, **dadurch gekennzeichnet, dass** das Entkuppelelement (9) eine ringförmige Platte (91) umfasst, die am Umfang längliche Öffnungen umfasst, die eine Nockenkurvenbahn bilden und gegenüber einem entsprechenden radialen Abdruck (33A, 33B, 33C) des zweiten Flanschs (3) liegt, und dass die Backen (95A, 95B, 95C) jeweils einen vorstehenden Stift (97) umfassen, dessen freies Ende in eine entsprechende Nockenkurvenbahn eingefügt ist, wobei die länglichen Öffnungen derart gestaltet sind, dass das Indrehungversetzen des Entkuppelelements (9) das Gleiten der Backen (95A, 95B, 95C) entlang der radialen Abdrücke (33A, 33B, 33C) bewirkt.

4. Gelenkanordnung nach einem der Ansprüche 2 oder 3, **dadurch gekennzeichnet, dass** die Backen (95A, 95B, 95C) an ihren inneren Enden Zähne (96) aufweisen, die geeignet sind, um mit einem Zahnband (66), das an dem Außenumfang der Schale (6) angeordnet ist, zusammenzuwirken.

5. Gelenkanordnung nach einem der Ansprüche 2 bis 4, **dadurch gekennzeichnet, dass** das Entkuppelelement (9) drei Backen (95A, 95B, 95C) umfasst, die an 120° voneinander angeordnet sind.

6. Gelenkanordnung nach einem der Ansprüche 2 bis 5, **dadurch gekennzeichnet, dass** sie elastische Rückstellmittel (34A, 34B, 34C) umfasst, die das Entkuppelelement (9) ständig derart belasten, dass die Backen (95A, 95B, 95C) in der Schale (6) im Eingriff sind, und dass die Gelenkanordnung die verriegelte Konfiguration belegt.

7. Gelenkanordnung nach Anspruch 6, **dadurch gekennzeichnet, dass** die elastischen Rückstellmittel Spiralfedern (34A, 34B, 34C) umfassen, die an ihren zentralen Enden auf dem zweiten Flansch (3) befestigt sind, und deren radiale umfängliche Enden jeweils an entsprechenden Pratzen (93A, 93B, 93C) aneinander gefügt liegen, die axial von dem Umfang des Entkuppelelements (9) und in Richtung des zweiten Flanschs (3) vorstehen.

8. Gelenkanordnung nach Anspruch 7, **dadurch gekennzeichnet, dass** sie drei Spiralfedern (34A, 34B, 34C) umfasst, die auf dem zweiten Flansch (3) an 120° voneinander befestigt sind und mit drei Pratzen (93A, 93B, 93C), die ebenfalls an 120° voneinander angeordnet sind, zusammenwirken.

9. Gelenkanordnung nach einem der Ansprüche 6 bis 8, **dadurch gekennzeichnet, dass** sie ein zweites Steuerelement (93B) umfasst, das auf das Entkuppelelement (9) montiert ist und einen Schlitz (35) in Kreisbogen durchquert, der sich auf dem zweiten Flansch (3) befindet, wobei es das zweite Steuerelement (93B) einem Benutzer erlaubt, das Entkuppelelement (9) gegen die elastischen Rückstellmittel (34A, 34B, 34C) derart in Drehung zu versetzen, dass die Backen (95A, 95B, 95C) von der Schale (6) beabstandet sind, und dass die Gelenkanordnung die entriegelte Konfiguration belegt.

10. Gelenkanordnung nach einem der Ansprüche 1 bis 9, **dadurch gekennzeichnet, dass** sie ein Ritzel (5) umfasst, das die Außenverzahnung (52) umfasst, wobei die Innenseite des ersten Flanschs (2) ein verzahntes ringförmiges Relief (23) umfasst, das in einen entsprechenden Abdruck (51), den das Ritzel (5) aufweist, eingerastet ist.

## Claims

1. A disengageable articulation assembly for motor vehicle seat comprising:
- a first flange (2) that is rotationally connected to an external toothing (52) having a first axis;
- a second flange (3), said first and second flanges (2, 3) being provided so as to be fixed respectively to the seat pan and to the back of the seat or vice versa;
- a cam mechanism connecting said external toothing (52) to an internal toothing (65) having a second axis parallel to and at a slight distance from said first axis, and comprising a number of teeth greater by at least one tooth than that of said external toothing (52),
- a control member (8) for rotating said cam mechanism and driving the rotation of said external toothing (52) in said internal toothing (65);
said articulation assembly being **characterized in that** it furthermore comprises disengaging means (9) that are able to pass said articulation assembly from a locked configuration in which said internal toothing (65) is rotationally connected to said second flange (3) to an unlocked configuration in which said internal toothing (65) and said second flange (3) are rotationally disconnected from one another.

2. The articulation assembly according to Claim 1, **characterized in that** said disengaging means comprise a disengaging member (9) including jaws (95A, 95B, 95C) able to slide along corresponding radial recesses (33A, 33B, 33C) provided on said second flange (3) to come to bite a retainer (6) housing said internal toothing (65), such that this internal toothing (65) is rotationally connected to said second flange (3) and that said articulation assembly then occupies said locked configuration.

3. The articulation assembly according to Claim 2, **characterized in that** said disengaging member (9) comprises an annular plate (91) including on the periphery oblong openings forming a cam track and situated opposite a said corresponding radial recess (33A, 33B, 33C) of said second flange (3), and **in that** said jaws (95A, 95B, 95C) each comprise a projecting pin (97), the free end of which is introduced into a said corresponding cam track; said oblong openings being shaped such that the setting into rotation of said disengaging member (9) drives the sliding of said jaws (95A, 95B, 95C) along said radial recesses (33A, 33B, 33C).

4. The articulation assembly according to one of Claims 2 or 3, **characterized in that** said jaws (95A, 95B, 95C) have, at their interior ends, teeth (96) able to cooperate with a notched band (66) disposed at the exterior periphery of said retainer (6).

5. The articulation assembly according to one of Claims 2 to 4, **characterized in that** said disengaging member (9) comprises three said jaws (95A, 95B, 95C) disposed at 120° from one another.

6. The articulation assembly according to one of Claims 2 to 5, **characterized in that** it comprises elastic return means (34A, 34B, 34C) permanently stressing said disengaging member (9) such that said jaws (95A, 95B, 95C) bite said retainer (6) and that said articulation assembly occupies said locked configuration.

7. The articulation assembly according to Claim 6, **characterized in that** said elastic return means comprise spiral springs (34A, 34B, 34C) fixed by their central ends on said second flange (3) and the radial peripheral ends of which are respectively coupled to corresponding lugs (93A, 93B, 93C) projecting axially from the periphery of said disengaging member (9) and in the direction of said second flange (3).

8. The articulation assembly according to Claim 7, **characterized in that** it comprises three said spiral springs (34A, 34B, 34C) fixed on said second flange (3) at 120° from one another and cooperating with three said lugs (93A, 93B, 93C) disposed likewise at 120° from one another.

9. The articulation assembly according to one of Claims 6 to 8, **characterized in that** it comprises a second control member (93B) mounted on said disengaging member (9) and passing through a slot (35) having the shape of an arc of a circle situated on said second flange (3), said second control member (93B) permitting a user to set in rotation said disengaging member (9) counter to said elastic return means (34A, 34B, 34C) such that said jaws (95A, 95B, 95C) are separated from said retainer (6) and that said articulation assembly occupies said unlocked configuration.

10. The articulation assembly according to one of Claims 1 to 9, **characterized in that** it comprises a pinion (5) including said external toothing (52), the internal face of said first flange (2) comprising a notched annular relief (23) fitted in a corresponding recess (51) which said pinion (5) presents.
